Europäisches Patentamt

European Patent Office

Office européen des brevets

(11) Veröffentlichungsnummer: **0 263 094**
**A2**

## (12) EUROPÄISCHE PATENTANMELDUNG

(21) Anmeldenummer: 87890216.2

(22) Anmeldetag: 25.09.87

(51) Int. Cl.⁴: **B 32 B 35/00**
B 29 C 67/00

(30) Priorität: 03.10.86 AT 2625/86

(43) Veröffentlichungstag der Anmeldung:
06.04.88 Patentblatt 88/14

(84) Benannte Vertragsstaaten:
AT BE CH DE ES FR GB IT LI NL SE

(71) Anmelder: ISOVOLTA Österreichische Isolierstoffwerke
Aktiengesellschaft
Industriezentrum-Süd
A-2351 Wiener Neudorf (AT)

(72) Erfinder: Ondrejas, Johann
Schimmelgasse 10/1
A-1030 Wien (AT)

Zitz, Friedrich, Dr.
Berggasse 63
A-8240 Friedberg (AT)

(74) Vertreter: Stampfer, Heinz
ISOVOLTA Österreichische Isolierstoffwerke AG
Industriezentrum-Süd
A-2351 Wiener Neudorf (AT)

(54) Reparier-Laminat und seine verwendung.

(57) Zum raschen Reparieren von insbesondere im Flugzeugbaueingesetzten Leichtbaupaneelen, die aus einem Leichtbaukern 2, z.B. in Form einer gegebenenfalls gequetschten Bienenwabenstruktur, und zwei Decklaminaten 3, 4 besteht, dient ein Reparier-Laminat, das eine feste ausgehärtete oder thermoplastische Kunststoffschicht 13 aufweist, welche an der einen Seite mit einer Heißschmelzkleber-Schicht 15 und gegebenenfalls an der anderen Seite mit einer dekorativen Deckschicht verbunden ist. Die Kunststoffschicht 13 kann dabei vorteilhaft aus einem glasgewebeverstärkten Phenol-Aldehydharz und die Deckschicht aus einer eingefärbten Polyvinylfluoridfolie bestehen.

Für die Reparatur wird an der beschädigten Stelle 5 ein Bereich 6 der beschädigten Decklaminate 3, 4 und das darunterliegende Kernmaterial entfernt, in das Volumen der entfernten Kernbereiche und gegebenenfalls der entfernten Decklaminatbereiche ein Ersatzkernmaterial eingebracht, die Paneeloberfläche an den beschädigten Decklaminaten 3, 4 angeschliffen und Reparier-Laminat-Zuschnitte 11 über die Bereiche der beschädigten Stellen durch Aufbügeln an der angeschliffenen Paneeloberfläche angeklebt. wobei diese Zuschnitte 11 die entfernten Decklaminat-Bereiche 6 seitlich überlappen.

Fig. 2

**Beschreibung**

Reparier-Laminat und seine Verwendung

Die Erfindung betrifft ein Reparier-Laminat sowie seine vorteilhafte Verwendung zum Reparieren von Beschädigungen von Leichtbaupaneelen, wie sie in Flugzeugen eingebaut sind.

Wände und Unterteilungen der Frachträume von Großflugzeugen werden üblicherweise durch Leichtbaupaneele gebildet bzw. mit solchen Paneelen verkleidet, die international als "Cargo Panels" bekannt sind. Leichtbaupaneele dieser Art bestehen üblicherweise aus einem Leichtbaukern in Bienenwabenstruktur der zumindest an einer Frontseite mit einem Decklaminat verbunden ist.

Es entstehen nun gelegentlich - hauptsächlich beim Be-und Entladen des Frachtgutes - an diesen Paneelen mechanische Beschädigungen, bei welchen im allgemeinen das Decklaminat und der Leichtbaukern eingedrückt ist bzw. aber auch das Paneel ganz durchstoßen sein kann.

Für die Reparatur solcher Schäden wird derzeit im Bereich der beschädigten Stelle das Decklaminat und gegebenenfalls der Leichtbaukern zumindest zum Teil abgetragen bzw. entfernt und die entfernten Teile des Leichtbaukerns eventuell ergänzt. Auf die so hergerichtete beschädigte Stelle wird nun ein mit einem Epoxydharz-Härtergemisch getränktes Glasfasergewebe in einer oder mehreren Lagen übereinander anlaminiert. Die Reparatur der Paneele kann dabei im Rahmen einer Überholung des Flugzeuges am ausgebauten Paneel erfolgen, wobei das Aushärten der anlaminierten Epoxydharzschichten vorzugsweise bei erhöhter Temperatur in einem Ofen erfolgt. Ein Anlaminieren der Epoxydharzschichten am nicht ausgebauten Paneel könnte nur bei einer wenig erhöhten Temperatur erfolgen, was aber dann zu relativ langen Aushärtezeiten führen würde, die z.B. für eine Reparatur im Rahmen der einfachen Flugzeugwartung zu lange wären.

Hier will die Erfindung Abhilfe schaffen. Die Erfindung, wie sie in den Ansprüchen gekennzeichnet ist, löst die Aufgabe, ein Reparier-Laminat anzugeben, das eine besonders rasche und einfache Reparatur von mechanischen Beschädigungen von Leichtbaupaneelen, wie sie insbesondere in Frachträumen von Großraumflugzeugen eingesetzt werden, erlaubt, ohne daß diese Paneele ausgebaut zu werden brauchen, wobei während des Verfahrens möglichst wenig schädliche Emissionen auftreten sollen. Die Erfindung betrifft ferner die Verwendung des Reparier-Laminates zum Reparieren solcher Leichtbaupaneele.

Die Erfindung wird nachstehend anhand der Figuren näher erläutert.

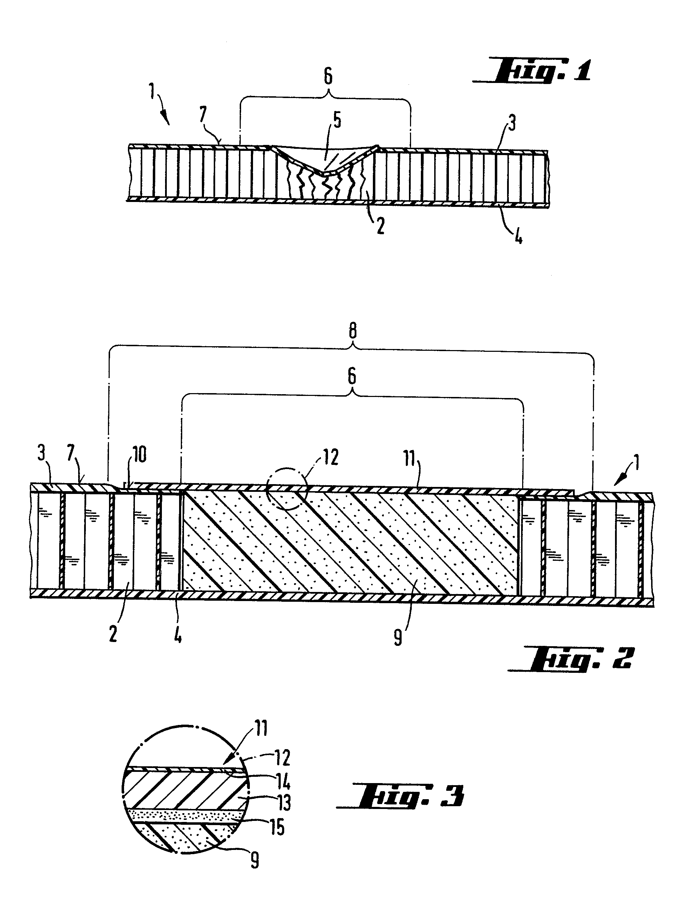

Fig. 1 zeigt schematisch im Schnitt ein "Cargo Panel" 1, wie es üblicherweise im Flugzeugbau eingesetzt wird. Dieses Paneel 1, das eine Gesamtdicke von etwa 7 mm hat, weist als Kern 2 eine Honeycomb-Struktur auf, welche aus einem Polyamidfaser-Papier, wie man es z.B. unter dem Handelsnamen "Nomex" kennt, hergestellt ist. An den beiden Frontflächen des Honeycomb-Kernes 2 sind Decklaminate 3 bzw. 4 einer Dicke von etwa 0,2 mm anlaminiert, die kernseitig jeweils eine dünne Schicht aus mit Phenol-Formaldehydharz imprägniertem Glasgewebe enthalten, welche ihrerseits an der Paneelaußenseite mit einer weiß eingefärbten Polyvinylfluoridfolie (z.B. erhältlich unter dem Handelsnamen "Tedlar") verbunden ist. Anstelle des beschriebenen Honeycomb-Kernes 2 kann der Kern - wie bei Flugzeugpaneelen bekannt - auch aus einer zusammengequetschten Honeycomb-Struktur bestehen.

Ein solches Paneel 1 sei nun, z.B. durch Anstoßen der Ecke eines Frachtgutes an einer in Fig. 1 mit 5 angedeuteten Stelle beschädigt worden. Die Reparatur dieser beschädigten Stelle 5 wird nun folgendermaßen durchgeführt. Über einen mit 6 bezeichneten Bereich, der an der Paneelfrontseite 7 z.B. die Form eines Quadrates mit abgerundeten Kanten aufweist und welcher die beschädigte Stelle 5 umfaßt, wird das Decklaminat 3 und das darunterliegende Kernmaterial z.B. durch Ausfräsen abgetragen.

Die weiteren Verfahrensschritte sind nachstehend anhand von Fig. 2 erläutert, welches das Paneel 1 in einem im Verhältnis zu Fig. 1 vergrößerten Maßstab zeigt. Zunächst wird in das Volumen des über den Bereich 6 entfernten Decklaminats 3 bzw. Kernmaterials ein Ersatzkernmaterial 9, das aus einem aushärtenden Kunststoffkitt bestehen kann, eingebracht. Danach wird die Paneelfrontseite 7 über einen Bereich 8, der den Bereich 6 seitlich überlappt, angeschliffen, so daß dort die Polyvinylfluoriddeckfolie des Decklaminats 3 entfernt wird und an dem Ersatzkernmaterial 9 und dem Decklaminat 3 eine rauh geschliffene Oberfläche 10 zurückbleibt.

Zur Ergänzung des abgetragenen Decklaminats 3 dient nun ein Reparier-Laminat in Form eines Verbundes mit folgendem Aufbau. An eine durch zwei Glasgewebelagen verstärkte Kunststoffschicht, hergestellt durch Imprägnierung der Glasgewebelagen mit einem Phenol-Formaldehydharz vom Resoltyp mit einem Glasgehalt von 100 g/m² und einem Phenolharzgehalt von 110 g/m² (Feststoff) sowie nachfol gender Aushärtung, ist an einer Frontseite der Kunststoffschicht eine Schicht eines Schmelzklebers auf Polyesterbasis mit einer Auftragsmenge von etwa 125 g/m² aufgetragen, während die andere Frontseite der Kunststoffschicht mit einer z.B. 0.025 mm starken Deckfolie verbunden ist, die aus einem z.B. weiß eingefärbten Polyvinylfluorid besteht.

Ein Zuschnitt 11 (Fig. 2) eines solchen Reparier-Laminats, z.B. in Form eines Quadrats mit abgerundeten Ekken, wird nun mit Hilfe eines bügeleisenartigen Werkzeuges mit der Schmelzkleber-Schicht gegen die rauh angeschliffene Oberfläche 10 der Paneelfrontfläche 7 gedrückt und dabei auf etwa eine Temperatur von 105° C erhitzt, bei welcher der Schmelzkleber aktiviert und mit der rauh geschliffenen Oberfläche 10 eine gute Verbindung eingeht.

Fig. 3 zeigt in einer den Kreis 12 von Fig. 2 entsprechenden Schnittdarstellung den Aufbau des Reparier-Laminats mit der Glasgewebe verstärkten Kunststoffschicht 13, der Deckfolie 14 sowie der Schmelzkleber-Schicht 15.

Besteht die Beschädigung des Paneels darin, daß nicht nur ein Decklaminat und der Kern eingedrückt, sondern das Paneel 1 über seine ganze Dicke durchstoßen ist, geht man so vor, daß aus dem Paneel an der beschädigten Stelle ein fensterförmiger Durchbruch ausgeschnitten wird. Danach wird das Paneel an der Oberfläche eines der Decklaminate (z.B. des Decklaminates 4) über den Bereich 8 angeschliffen und dann auf diesem - analog wie anhand von Fig. 2 beschrieben - durch "Aufbügeln" ein erster Reparier-Laminat-Zuschnitt 11 angebracht. Danach erfolgt das Einbringen des Ersatzkernmaterials 9, das Anschleifen der Paneelfrontfläche 7 sowie das Aufbringen eines (hier nun zweiten) Reparier-Laminat-Zuschnittes 11 an der Paneelfrontfläche 7 genau so wie anhand von Fig. 2 beschrieben.

In Abwandlung des vorstehend beschriebenen Reparierverfahrens kann das Material des entfernten Leichtbaukernbereiches bzw. gegebenenfalls der entfernten Decklaminatbereiche statt durch ein Ersatzkernmaterial 9 vorteilhaft auch durch ein Stück eines passend zugeschnittenen originalen Kernmaterials, das in die gebildete Höhlung eingeklebt wird, ersetzt werden.

**Patentansprüche**

1. Zum Reparieren von Leichtbaupaneelen bestimmtes Laminat, gekennzeichnet durch zumindest eine feste, ausgehärtete oder thermoplastische Kunststoffschicht (13) und durch eine Schicht (15) aus einem durch Zufuhr von Wärme aktivierbaren Bindemittel an einer der Laminatoberflächen.

2. Reparier-Laminat nach Anspruch 1, dadurch gekennzeichnet, daß die Kunststoffschicht (13) eine Faserverstärkung enthält.

3. Reparier-Laminat nach Anspruch 2, dadurch gekennzeichnet, daß die Faserverstärkung aus einem Fasergewebe besteht.

4. Reparier-Laminat nach Anspruch 2 oder 3, dadurch gekennzeichnet, daß die ausgehärtete Kunststoffschicht (13) einen duromeren Kunststoff enthält.

5. Reparier-Laminat nach einem der Ansprüche 1, dadurch gekennzeichnet, daß es an der von der Bindemittel-Schicht (15) abgewandten Laminatoberfläche eine dekorative Deckschicht aufweist.

6. Reparier-Laminat nach Anspruch 5, dadurch gekennzeichnet, daß die dekorative Deckschicht eine Folie (14) enthält oder aus einer solchen besteht, die zumindest überwiegend aus Polyvinylfluorid besteht.

7. Reparier-Laminat nach einem der Ansprüche 1 bis 6, dadurch gekennzeichnet, daß der duromere Kunststoff zumindest zum größten Teil aus einem Phenol-Aldehydharz besteht.

8. Reparier-Laminat nach einem der Ansprüche 1 bis 7, dadurch gekennzeichnet, daß die Bindemittel-Schicht (15) einen Heißschmelzkleber enthält.

9. Verwendung eines Reparier-Laminates gemäß einem der Ansprüche 1 bis 8, dadurch gekennzeichnet, daß es zum Reparieren von Beschädigungen von insbesondere in Flugzeugen eingebauten Leichtbaupaneelen verwendet wird, welche Paneele (1) jeweils einen Leichtbaukern (2) und zumindest ein Decklaminat (3, 4) an einer Paneeloberfläche (7) aufweisen, wobei im Bereich der beschädigten Stelle (5) das oder die Decklaminat(e) (3,4) und gegebenenfalls der Leichtbaukern (2) jeweils zumindest zum Teil abgetragen oder entfernt wird bzw. werden, wonach Zuschnitte (11) des Reparier-Laminats durch Anpressen und unter Aktivierung des Bindemittels durch Zufuhr von Wärme über den Bereich der beschädigten Stellen (5) an der Paneeloberfläche angeklebt werden, wobei die Zuschnitte (11) die an der beschädigten Stelle entfernten Decklaminat-Bereiche (6) seitlich überlappen.

10. Verwendung nach Anspruch 9, dadurch gekennzeichnet, daß in das Volumen des entfernten Leichtbaukern-Bereiches und gegebenenfalls der entfernten Decklaminatbereiche ein Ersatzkernmaterial (9) eingebracht wird.

11. Verwendung nach Anspruch 9, dadurch gekennzeichnet, daß in das Volumen des entfernten Leichtbaukern-Bereiches und gegebenenfalls der entfernten Decklaminatbereiche ein Stück Original-Kernmaterial eingebracht und/oder eingeklebt wird.

0263094

Fig. 1

Fig. 2

Fig. 3